# EUROPEAN PATENT APPLICATION

(11) **EP 2 902 660 A1**
(43) Date of publication of application: **05.08.2015**
(21) Application number: 13840887.7
(22) Date of filing: 06.05.2013
(51) Int. Cl.: F16H 3/44, A21B 1/42, A21B 1/46

(54) **ORBITING MECHANISM FOR PIZZA OVENS**

(30) Priority: 27.09.2012 BR 102012024598
(71) Applicant: Pinto, Alex Fabiano, São Bernardo do Campo - SP (BR)
(72) Inventor: Pinto, Alex Fabiano, São Bernardo do Campo - SP (BR)
(74) Representative: Temino Ceniceros, Ignacio
(86) International application number: PCT/BR2013/000146
(87) International publication number: WO 2014/047700

(57) **Abstract**

Orbital mechanism for pizza ovens is essentially composed of a mechanism (1) in which the highlights are the set of refractory dishes (2) supported directly by bases (15) which orbit on the opposite direction of the central (3) axis of the reduction set (4) when the sprockets (5) come in contact with the fixed central rack (6), thus enabling an uniform, paced and highly productive baking of pizzas.

## Description

### FIELD OF THE INVENTION

This Patent of Invention request refers to an unprecedented orbital mechanism for pizza ovens, which is a mechanism composed of a fixed rack orbited by a set of trays supported by bases overlapping toothed wheels which, when in contact with the aforementioned rack, impose a radial movement in opposition to the drive shaft that has its speed controlled by a frequency inverter, thus enhancing and pacing pizza production.

The invention is used in different ovens for pizzas and various goods baked on an industrial scale, not only in pizzerias but also in other businesses such as bakeries, restaurants, steakhouses and so on.

### BACKGROUND OF THE INVENTION

It is known that there are two types of ovens, these being fixed/stationary ones, made of refractory brick and powered by gas, firewood and electricity, and also continuous ovens geared towards high output production, which use the same heating elements mentioned above.

In fixed brick ovens, such as those without moving parts in the hot chamber, the tasks of supplying and removing food require a great effort and qualified/experienced professionals, who constantly handle the pizzas, in accordance with this patent application, using considerably long scoops.

Despite the widespread dissemination of brick ovens, the existence of areas that have different temperatures inside them favors a poor heat distribution, resulting in irregularly baked pizzas and/or pizzas burned in specific spots, especially in more protruding edges. Therefore, supervision is essential, as well as skills, the intervention and an effort by the oven operator to ensure the ideal baking point.

Another negative feature of fixed brick ovens is their low productivity when compared to continuous equipment. At first, the oven operator can maintain a productive pace, which will not last long due to fatigue resulting from repetitive efforts and the unhealthy (high temperature) environment.

In the context above, productivity is directly related to the firing temperature variation. The higher the temperature, the more interventions and more handling of the products being baked are needed, which results in a productivity intimately related to the physical conditions of the oven operator. Therefore, over the working day, a natural reduction in the operating performance happens.

On the other hand, high production ovens use a mechanism for moving pizzas longitudinally, such as a conveyor or rotation device, so that the product is baked along a route traveled inside the hot chamber during a time interval which varies according to the oven temperature. The current state of the art anticipates some patent documents that deal with ovens, such as PI 8000600-0 "Arrangement introduced in a rotary oven". This is a single-chamber oven that has as its single highlight a heat exchanger that, together with a fan, promotes the uniformity of the temperature inside it. In this type of oven, the rotating table is activated by an electric motor coupled to a reducer, thus generating the continuous movement of the table.

PI 9400533-8 "Rotating Pizza Ovens" - composed by a rotating table activated by an electrical engine attached by belts to a reducer, which gives the dish a radial movement. A reduction system synchronizes its angle velocity so it is the same as the controlling dish. A control panel regulates the angular speed, flame intensity, safety valves, thermostats and pressure gauges. The patent documents above mentioned the use of rotating dishes that receive pizzas. However, they have the drawback of exposing excessively the edges of the pizza to higher temperatures. This happens because only one side of the pizza edge will be closer to the more intense heat source, which may cause excessive burns or even product loss.

### DESCRIPTION OF THE INVENTION

Aware of the state of the art, its shortcomings and drawbacks, and after studies and research, the inventor created the Orbital Mechanism For Pizza Ovens, which has a set of refractory dishes on which the pizzas are placed through the oven inlet and that, through a combination of free sprockets and a fixed rack, revolve in the opposite direction to the axis of the drive element so that a continuous radial movement forces the pizza to rotate, impeding the prolonged exposure of its edges to spots in the oven that have a higher temperature. With the orbital motion made possible by the claimed mechanism, it is possible to equalize the heat distribution over the entire pizza surface, leading to its uniform baking, as well as standardizing the time they remain in the oven, pacing production and, consequently, enhancing pizza production, protecting its organoleptic characteristics.

Operationally, the oven operator adjusts the speed of the mechanism through a frequency converter, so that once a whole turn in the hot chamber is completed, the pizza returns back to the inlet uniformly baked. Thus, the pizza is removed and another one, still unbaked, is placed over the same refractory dish.

Depending on the mechanism speed, which is directly proportional to the temperature of the oven, a pizza can remain inside for about 90 seconds - in this case, there is a productivity of 22.5 seconds / pizza. When the oven has a lower temperature, i.e. 380 °C, the speed should also be lower. In this scenario, productivity is of 30 seconds / pizza.

The mechanism in question gathers specific differences that result in many advantages, such as:
➢ The enhancement of production capacity, with a substantial increase in oven yield;
➢ Operational versatility - The mechanism does not require skilled labor;
➢ Ease and safety while positioning pizzas over the refractory dish;
➢ Ergonomics - improves the working posture of the oven operator, who has also less physical demands;
➢ Possibility of being installed in any fixed oven;
➢ Constructive simplicity, with the use of slots and cotter pins clamps
➢ Paced pizza production;
➢ Standardizing production time;
➢ A guaranteed equitable heat distribution over the entire pizza surface - prevents excessively burned edges;
➢ Reduction in material costs due to an increase in productivity;
➢ Ease of use;
➢ Easy installation, among others.

### BRIEF DESCRIPTION OF THE DRAWINGS

Below, the invention is explained with references to the attached drawings, in which the equipments are shown on an illustrative and non-limitative manner:

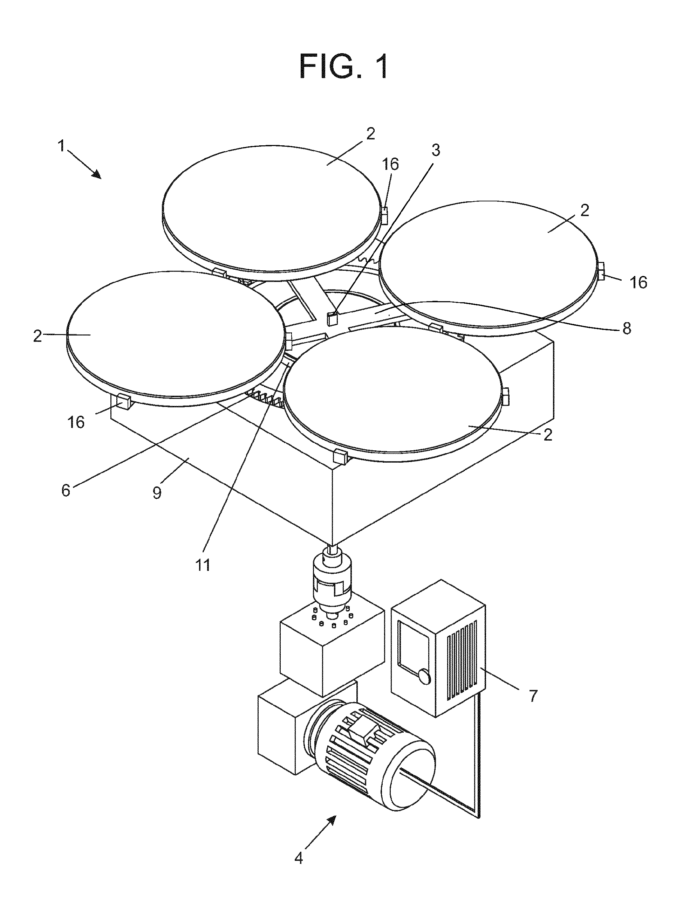

Fig. 1: Perspective view of the orbital mechanism for pizza ovens;

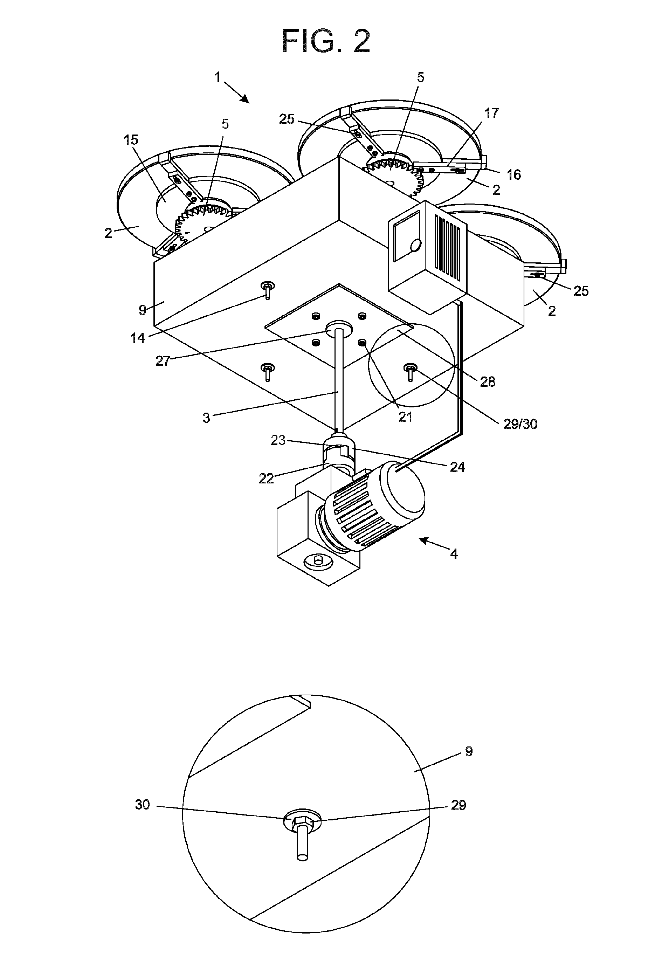

Fig. 2: Inverted perspective view of the orbital mechanism for pizza ovens;

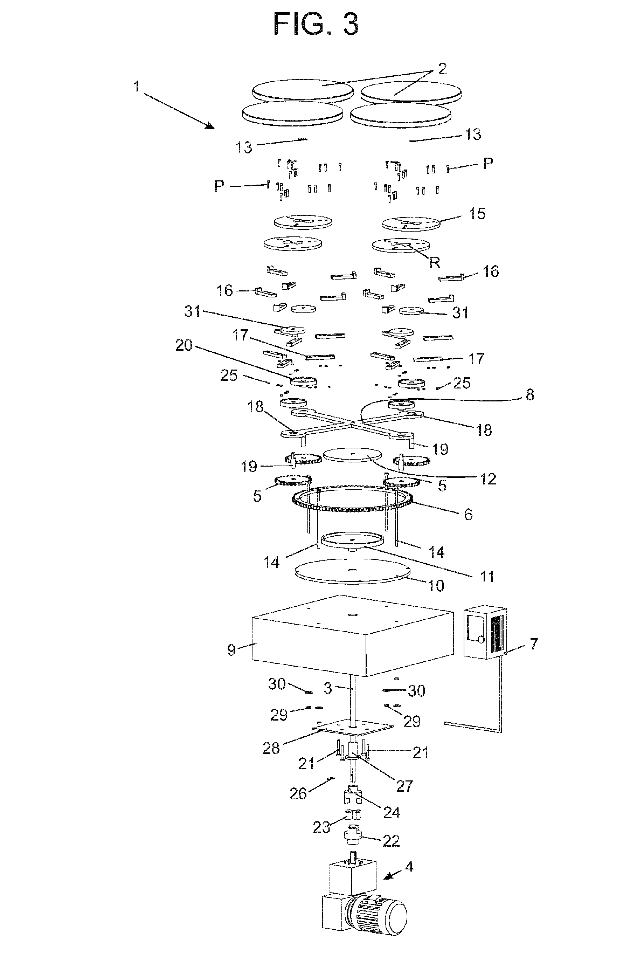

Fig. 3: Total exploded perspective view of the orbital mechanism for pizza ovens;

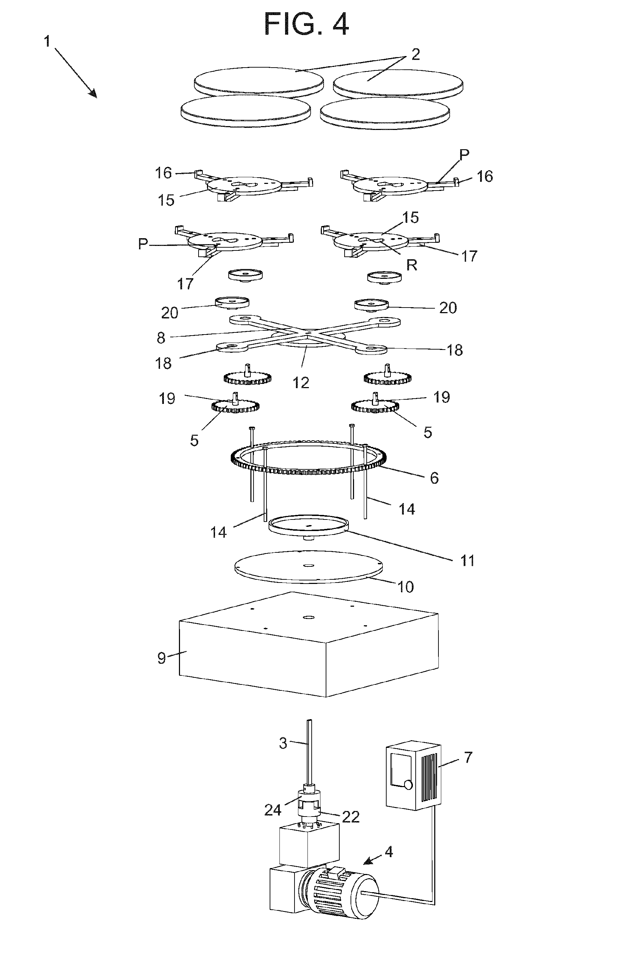

Fig. 4: Exploded perspective view of the orbital mechanism for pizza ovens, showing the main mounted subsets;

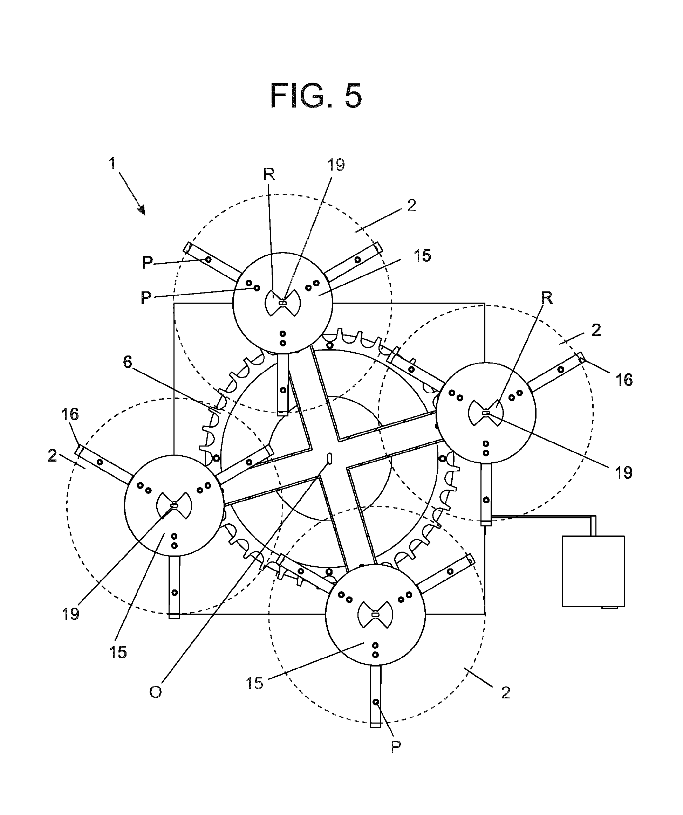

Fig. 5: Superior sectional view of the orbital mechanism for pizza ovens, showing the main moving components;

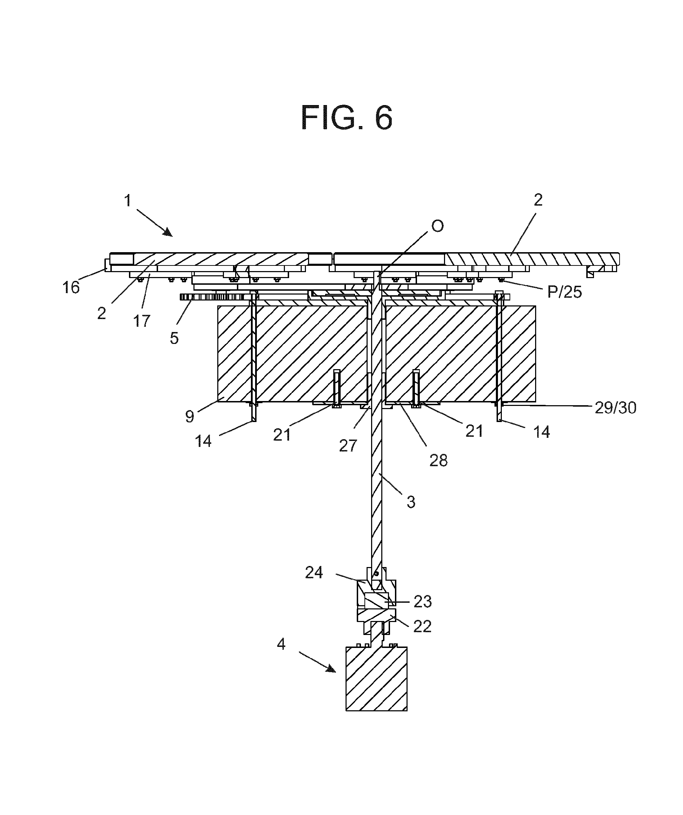

Fig. 6: Side sectional view of the orbital mechanism for pizza ovens;

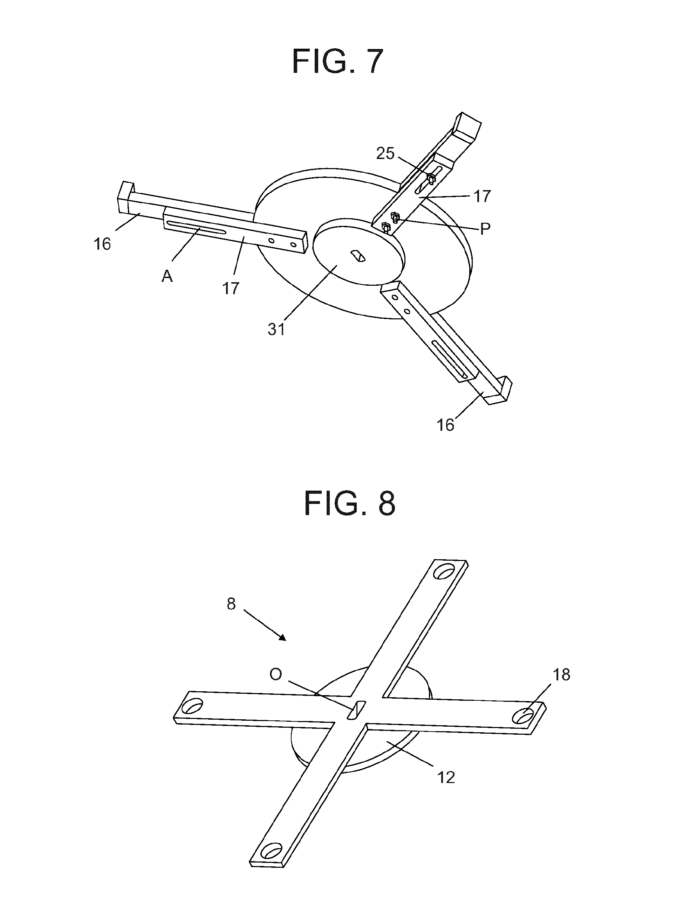

Fig. 7: Inverted perspective view of the rod base for the orbital mechanism for pizza ovens;
Fig. 8: Perspective view of the crosspiece for the orbital mechanism for pizza ovens, with a zoomed in view of the slot;

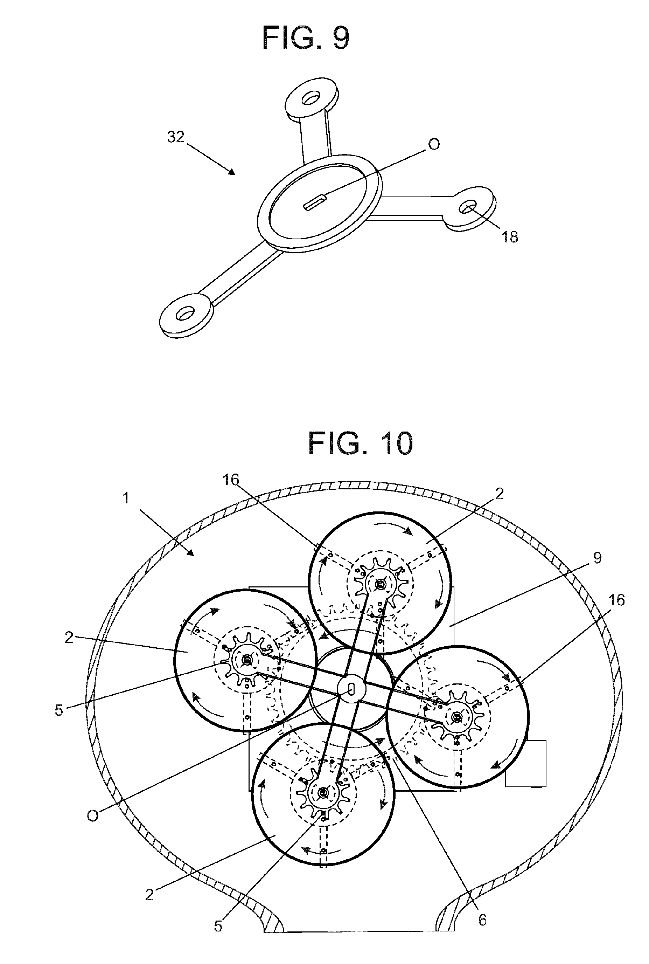

Fig. 9: Perspective view of the star-shaped profile of the orbital mechanism for pizza ovens;
Fig. 10: Schematic view of the invented mechanism assembled on an oven, with details for the pizza spin on the dishes.

### DESCRIPTION OF A PREFERRED EMBODIMENT OF THE INVENTION

The Orbital Mechanism For Pizza Ovens, object of this Patent of Invention request, is essentially composed of a mechanism (1) in which the highlights are the set of refractory dishes (2) supported directly by bases (15) which orbit on the opposite direction of the central (3) axis of the reduction set (4) when the sprockets (5) come in contact with the fixed central rack (6), thus enabling an uniform, paced and highly productive baking of pizzas.

More particularly, the mechanism (1) being claimed has as its driving means one gear motor (4) connected to a frequency inverter (7), responsible for adjusting the speed on the crosspiece rotating shaft (8) with a support (12) ring, which receives at its ends the rod-containing (16 and 17) bases (15) which can directly receive, without any fittings or greater difficulties, the refractory dishes (2) on which the pizzas are placed. The rod (17) is a flat bar fixed by bolts (P) and nuts (25) to the base (15), while the rod (16) with an extreme bending is superimposed on the first rod (17), to which it is equally fixed, but including a margin for movement / diameter adjustment thanks to a groove (A).

Over the oven ballast (9) and a plate (10) a rack (6) is fixed using piercing rods (14), which grip nuts (29) and washers (30) positioned on the inner face of the ballast (9) itself, firmly fixing the set. In turn, the movement of the mechanism (1) is made possible by the central shaft (3) being connected to the gearbox (4) that passes through the ballast (9), the plate (10) and the leveling nut (11), with this latter sliding until fitting in the slot (O) central to the crosspiece (8), without need for any additional fixation element other than the shaft (3) inserted in the slot. Each of the ends of the crosspiece (8) receives a sprocket (5) which, when in contact with the fixed rack (6) and the rotating central axis (3), create the orbital movement of the bases (15) and their respective rods (16 and 17), over which, as already mentioned, the refractory dishes (2) can be easily placed. Therefore, the hole ends (18) of the crosspieces (8) are pierced by centering pins (19) connected to the sprockets (5), passing also through the drag bushings (20) above the aforementioned ends in which the lug (31) of the base (15) supports itself. Thus, the oval contour distal portion of the centering pin (19) is shown in the butterfly-shaped base recess (R), in which a transversal cotter pin (13) has the function of impeding the fall of the sprocket (5) due to gravity - this, without any damage to the radial movement imposed by the central shaft (3), thereby enabling the rotation of the refractory dishes (2) in its opposite direction. To connect the reduction motor (4) to the central shaft (3), a lower coupling (22) is used, mediated by an insulator (23) to the upper coupling (24), which receives a roll pin (26) for its connection to the central shaft (3). A bushing (27) and a plate (28) fixed by screws (21) to the bottom of the oven ballast (9) of the mechanism provide the necessary stability to the central shaft (3). In order to broaden the use range of the orbital mechanism (1), a constructive variation has been conceived, in which it adopts a new star-shaped metallic profile (32), replacing the crosspiece (8) and that can accommodate three circular bases (15), reducing the projected area and making its use possible, for example, at sites with smaller ovens, without any prejudice to the features of the parent patent.

Operationally, the oven operator adjusts the speed of the mechanism (1) through a frequency converter (7), which sends this information to the gearbox (4) that is connected to the central shaft (3). This shaft transfers the radial movement to the crosspiece (8), which slides over the leveler bushing (11). According to the crosspiece (8) spin around the central shaft (3), the sprockets (5) are forced to move on the opposite direction of the shaft (3), since their teeth are in contact with the fixed rack (6) teeth. This being said, the rotation of the sprockets (5) is transferred to the bases (15) and then to the refractory dishes (2).

To determine the number of rotations that the pizzas make on their own axis, as well as the time for the mechanism requires to make a complete turn inside the oven, specific calculations are performed. In this manner, a direct relationship is established between the sprocket and rack diameter and the number of pizza rotations per minute. Briefly, if necessary to increase the number of times the pizza rotates on its own axis while the mechanism makes one revolution, one can simply reduce the diameter of the sprockets or increase the diameter of the rack.

## Claims

1. Orbital mechanism for pizza ovens, wherein a crosspiece (8) receives a base (15) with rods (16, 17) at its ends for the reception of a refractory dish (2); some centering pins (19) fixed to sprockets (5) which are shielded by drag bushings (20), which when touching a rack (6) fixed to a plate (10) and to the oven ballast (9) by some bolts (14), nuts (29) and screws (30), induces the movement of the base (15) following that of a central shaft (3) embedded in a slot (O) of crosspiece, but in the opposite direction; the ring support (12) of the crosspiece (8) slides on a leveling nut (11); the base (15) has a recess (R) for receiving a cotter pin (13) for mounting the sprocket (5); to connect a gearbox (4) to the central shaft (3), a lower coupling (22) is used, mediated by an insulator (23) to an upper coupling (24), which receives a roll pin (26) for connecting to the central shaft (3); a bushing (27) and a plate (28) fixed by screws (21) to the bottom surface of the oven ballast (9) give the necessary stability to the central shaft (3).

2. Orbital mechanism for pizza ovens, according to claim 1, wherein the rod (17) is attached to the base (15) with the purpose of attaching the rod (16) to its slot (A).

3. Orbital mechanism for pizza ovens, according to claim 1, wherein presents a construction variation that adopts a star-shaped profile (32) in which bases (15) are placed in its ends.
